# EUROPÄISCHE PATENTANMELDUNG

(11) **EP 4 729 447 A1**
(43) Veröffentlichungstag der Anmeldung: **22.04.2026**
(21) Anmeldenummer: 25209716.7
(22) Anmeldetag: 20.10.2025
(51) Int. Cl.: B65G 47/08, B65G 47/90, B65G 47/91, B65G 54/02, B65G 65/00, B65B 35/38

(54) **UMSETZSYSTEM UND VERFAHREN ZUM UMSETZEN VON PRODUKTEN AUF TRANSPORTMITTEL**

(30) Priorität: 21.10.2024 DE 102024130602
(71) Anmelder: Gerhard Schubert GmbH, 74564 Crailsheim (DE)
(72) Erfinder: Riek, Markus, 74564 Crailsheim (DE)
(74) Vertreter: Weickmann & Weickmann PartmbB

(57) **Zusammenfassung**

Die vorliegende Erfindung betrifft ein Umsetzsystem (100) zum Umsetzen von Produkten (26) auf Transportmittel (20), welche eine bestimmte Füllanzahl von Produkten (26) aufnehmen, wobei das Umsetzsystem (100) umfasst:
- wenigstens eine bewegte Produktfördervorrichtung (106), auf welcher die Produkte (26) entlang einer Beförderungsrichtung (120) beförderbar sind;
- wenigstens eine Transportvorrichtung (107), welche zum Bewegen der Transportmittel (20) eingerichtet ist; und
- wenigstens eine Umsetzvorrichtung (104) zum Umsetzen der Produkte (26) von der Produktfördervorrichtung (106) auf die Transportmittel (20) in einem Umsetzbereich (110),

wobei die Transportvorrichtung (107) die Transportmittel (20) wenigstens durch den Umsetzbereich (110) bewegt, und
wobei die Produktfördervorrichtung (106) und die Transportvorrichtung (107) wenigstens abschnittsweise parallel zueinander verlaufen,
wobei die Transportvorrichtung (107) wenigstens einen ersten Abschnitt (112) aufweist, entlang welchem ein Transport der Produkte (26) durch die Transportmittel (20) in der Beförderungsrichtung (120) der Produkte (26) verläuft, und wenigstens einen zweiten Abschnitt (113) aufweist, entlang welchem ein Transport der Produkte (26) durch die Transportmittel (20) entgegengesetzt zu der Beförderungsrichtung (120) der Produkte (26) verläuft. Ferner betrifft die Erfindung ein Verfahren zum Umsetzen von Produkten auf Transportmittel (20) mittels wenigstens einer Umsetzvorrichtung (104) eines Umsetzsystems (100).

## Beschreibung

Die vorliegende Erfindung betrifft ein Umsetzsystem zum Umsetzen von Produkten auf Transportmittel, welche eine bestimmte Füllanzahl von Produkten aufnehmen, sowie ein Verfahren zum Umsetzen von Produkten auf Transportmittel mittels wenigstens einer Umsetzvorrichtung eines Umsetzsystems.

Um Produkte, beispielsweise Pralinen oder Gebäckwaren, von einer Fördervorrichtung in Form eines Produktbandes in dafür vorgesehene Transportmittel umzusetzen, beispielsweise in Behälter, werden häufig Umsetzsysteme eingesetzt. Derartige Umsetzsysteme, welche unter anderem als Pickerstraßen oder Pickerlinien bekannt sind, umfassen neben der Produktfördervorrichtung insbesondere wenigstens einen, meist jedoch mehrere parallel zur Produktfördervorrichtung ausgerichtete Umsetzvorrichtungen. Diese Umsetzvorrichtungen sind dazu eingerichtet, die Produkte von der Produktfördervorrichtung aufzunehmen und auf Transportmittel, beispielsweise in einen Behälter in Form einer Pralinenschachtel umzusetzen. Das übergeordnete Ziel eines Umsetzsystems ist es, die Transportmittel vollständig mit einer vorbestimmten Anzahl an Produkten zu befüllen, sodass die Transportmittel anschließend weiter gehandhabt, beispielsweise verpackt, für den Verkauf vorbereitet und abtransportiert werden können.

Die Umsetzvorrichtungen müssen dabei äußerst filigran vorgehen, um die umzusetzenden Produkte weder zu beschädigen noch zu verformen. In diesem Zusammenhang hat es sich in der Verpackungsindustrie bewährt, flexibel anpassbare sowie präzise ansteuerbare Roboter als Umsetzvorrichtung zu verwenden, um mit hoher Geschwindigkeit und Präzision die bereitgestellten Transportmittel befüllen zu können. Diese Roboter werden auch als Pick-and-Place-Maschinen bzw. -Roboter oder Picker bezeichnet und können zum Umsetzen der Produkte beispielsweise Greif- oder Saugeinheiten aufweisen. Derartige Roboter können beispielsweise in der sogenannten Scara-Bauweise, d.h. als horizontaler Gelenkarmroboter, oder in der sogenannten Delta-Bauweise realisiert sein, d.h. als Parallelarmroboter mit Stabkinematik.

Die Transportmittel sind in der Regel auf einer eigenen Transportvorrichtung angeordnet, welche benachbart und parallel zu der Produktfördervorrichtung ausgerichtet ist, sodass die Ausleger der Umsetzvorrichtungen beim Umsetzen der Produkte möglichst kurze Wege zurücklegen müssen, wodurch wiederum die Effizienz des Umsetzsystems gesteigert wird. Darüber hinaus umfasst die beispielsweise als Kettenförderer ausgebildete Transportvorrichtung Antriebsmittel, um die Transportmittel relativ zu den Produkten auf der Produktfördervorrichtung zu bewegen. Hierbei ist die Anordnung zweier Transportvorrichtungen, welche jeweils auf einer Seite der Produktfördervorrichtung angeordnet sind, möglich und auch üblich.

Ursprünglich wurde beim Umsetzen der Produkte nach dem sogenannten Gleichlauf-Prinzip gearbeitet, d.h. dass die Transportvorrichtung die Transportmittel entlang einer Transportrichtung bewegt, welche der Beförderungsrichtung der Produktfördervorrichtung und dementsprechend einer Beförderungsrichtung der Produkte entspricht. Folglich passiert jedes Transportmittel einen Arbeits- bzw. Umsetzbereich jeder der in Reihe angeordneten Umsetzvorrichtungen des Umsetzsystems, wodurch neben einer Effizienzsteigerung beim Umsetzen der Produkte auf die Transportmittel, also beispielsweise das Befüllen der Behälter, auch der Abtransport der befüllten Transportmittel vereinfacht wird.

Vor einiger Zeit hat sich jedoch herausgestellt, dass die Effizienz des Umsetzsystems durch Einsatz des sogenannten Gegenlauf-Prinzips im Vergleich zu dem Gleichlauf-Prinzip noch einmal gesteigert werden kann. Bei dem Gegenlauf-Prinzip werden die zu befüllenden Transportmittel entgegengesetzt zu der Beförderungsrichtung der Produktfördervorrichtung bewegt, wodurch die Transportmittel erst am Ende des Transports durch die Transportvorrichtung den Anfang der Produktfördervorrichtung passieren, an welchem die Dichte der Produkte auf der Produktfördervorrichtung am höchsten ist. Durch entsprechende Steuerung der Umsetzvorrichtungen kann somit gewährleistet werden, dass für jedes Transportmittel auch gegen Ende dessen Befüllens noch ausreichend Produkte auf der Produktfördervorrichtung vorhanden sind, um ein vollständiges Befüllen zu gewährleisten. Dies ist insbesondere vorteilhaft, wenn es auf der Produktfördervorrichtung zu Unregelmäßigkeiten hinsichtlich Häufigkeit und Position der Produkte kommt.

Grundsätzlich ermöglicht der Einsatz des Gegenlauf-Prinzips im Vergleich zum Gleichlauf-Prinzip eine gleichmäßige Transport- bzw. Beförderungsgeschwindigkeit der Transportvorrichtung sowie der Produktfördervorrichtung. Insbesondere wird eine unerwünschte Leistungsreduzierung des Umsetzsystems vermieden, und es entsteht kaum Produktüberlauf, d.h. dass für die umzusetzenden Produkte in der Regel wenigstens ein zu befüllendes Transportmittel in dem Umsetzbereich einer Umsetzvorrichtung vorhanden ist.

An dieser Stelle sei auf die DE 10 2011 014 697 A1 der vorliegenden Anmelderin verwiesen, in welcher die Funktionsweise von Umsetzsystemen in Gleichlauf bzw. Gegenlauf erläutert wird und welche hiermit durch Bezugnahme aufgenommen wird.

Es hat sich jedoch gezeigt, dass Gegenlauf-Umsetzsysteme häufig relativ lange Produktfördervorrichtungen in Form von Produktbändern sowie entsprechend parallel dazu angeordnete Transportvorrichtungen aufweisen müssen, um eine ausreichend hohe Effizienz beim Befüllen der Transportmittel zu gewährleisten. Somit sind derartige Umsetzsysteme relativ platzintensiv, was vor allem in kleineren Produktionsstandorten problematisch ist. Ferner steigt mit der Länge des Umsetzsystems auch häufig die Anzahl der verwendeten Umsetzvorrichtungen, wodurch die Anschaffungs- und Wartungskosten des Umsetzsystems steigen.

Bei Umsetzsystemen, welche zwei unabhängige Transportvorrichtungen aufweisen, hat sich in der Praxis ein weiteres Problem herauskristallisiert. Im Anschluss an jede der beiden Transportvorrichtungen, welche jeweils entlang einer der beiden Längsseiten der Produktfördervorrichtung angeordnet sind, ist üblicherweise eine Handhabungseinheit vorgesehen. Diese Handhabungseinheit sollte wenigstens einseitig zugänglich sein und ist dazu eingerichtet, die befüllten Transportmittel von der Transportvorrichtung aufzunehmen und weiterzuverarbeiten, beispielsweise abzutransportieren. Aus Kostengründen und/oder - je nach Anordnung des Umsetzsystems an einem Produktionsstandort - aufgrund schlechter Zugänglichkeit wird oftmals nur eine der beiden Handhabungseinheiten eingesetzt. Dies hat zur Folge, dass das Umsetzsystem weniger leistungsstark ist. Außerdem können die Umsetzvorrichtungen in diesem Fall nur noch zu einer Seite umsetzen, d.h. zu einer der beiden Transportvorrichtungen hin, wodurch die Umsetzvorrichtungen entsprechend abgestimmt und eingerichtet werden müssen.

Es ist daher die Aufgabe der vorliegenden Erfindung, ein Umsetzsystem zum Umsetzen von Produkten auf Transportmittel bereitzustellen, welche eine bestimmte Füllanzahl von Produkten aufnehmen, wobei das Umsetzsystem eine ausreichend hohe Effizienz zum vollständigen Befüllen (Beladen) der Transportmittel aufweist und dabei platzsparend sowie kosteneffizient betrieben werden kann.

Diese Aufgabe wird erfindungsgemäß in einem ersten Aspekt durch ein Umsetzsystem zum Umsetzen von Produkten auf Transportmittel gelöst, welche eine bestimmte Füllanzahl von Produkten aufnehmen, wobei das Umsetzsystem wenigstens eine bewegte Produktfördervorrichtung, auf welcher die Produkte entlang einer Beförderungsrichtung beförderbar sind, wenigstens eine Transportvorrichtung, welche zum Bewegen der Transportmittel eingerichtet ist, und wenigstens eine Umsetzvorrichtung zum Umsetzen der Produkte von der Produktfördervorrichtung auf die Transportmittel in einem Umsetzbereich umfasst, wobei die Transportvorrichtung die Transportmittel wenigstens durch den Umsetzbereich bewegt, und wobei die Produktfördervorrichtung und die Transportvorrichtung wenigstens abschnittsweise parallel zueinander verlaufen, wobei die Transportvorrichtung wenigstens einen ersten Abschnitt aufweist, entlang welchem ein Transport der Produkte durch die Transportmittel in der Beförderungsrichtung der Produktfördervorrichtung verläuft, und wenigstens einen zweiten Abschnitt aufweist, entlang welchem ein Transport der Produkte durch die Transportmittel entgegengesetzt zu der Beförderungsrichtung der Produktfördervorrichtung verläuft.

Unter den Transportmitteln sind insbesondere zu befüllende Behälter, beispielsweise Schachteln, Boxen oder Kästen, oder mindestens ein Transportband zu verstehen. Ein Transportband kann dann eingesetzt werden, wenn Produkte, beispielsweise flache Kekse, im Zuge des Umsetzens durch die Umsetzvorrichtung einzeln auf dem Transportband abzulegen oder zu stapeln sind. Dabei kann bei Stapeln durch das Umsetzen eine vorbestimmte Stapelgröße erreicht werden. Um die Stapel während des Transports durch die Transportvorrichtung an ihrer jeweiligen Position zu halten und um Stapel voneinander abzugrenzen, können entlang der Haupterstreckungsrichtung eines Transportbandes sogenannte Mitnehmer angeordnet sein. Die einzelnen Stapel können von der Transportvorrichtung zu einer Handhabungseinheit bewegt und dort weiterverarbeitet, beispielsweise stapelweise durch eine Schlauchbeutelmaschine verpackt werden.

Die Transportmittel können Teil der Transportvorrichtung sein, insbesondere wenn ein Transportband als Transportmittel eingesetzt wird. Solche Transportmittel transportieren die Produkte nur temporär während des Betriebs des Umsetzsystems. Alternativ können die Transportmittel separate Komponenten sein, die Teil des Umsetzsystems sein können oder den Produkten zugeordnet und nicht Teil des Umsetzsystems sein können, insbesondere wenn Behälter als Transportmittel verwendet werden, die später als Einheit zusammen mit den Produkten gehandhabt, beispielsweise verpackt werden.

Produkten im Sinne der vorliegenden Erfindung können Einzelprodukte sein, insbesondere einteilige Objekte, aber auch eine Gruppe von Einzelprodukten, welche zur gemeinsamen Handhabung gruppiert werden, so dass sie beispielsweise von der Umsetzvorrichtung gemeinsam gegriffen und umgesetzt werden können. In einer solchen Gruppe von Einzelprodukten können die Einzelprodukte insbesondere aneinander gehalten sein, beispielsweise in einer Vorverpackung. Die Vorverpackung, einschließlich der darin enthaltenen Einzelprodukte bildet dann ein Produkt im Sinne der vorliegenden Erfindung.

Im Sinne der vorliegenden Erfindung ist unter dem Umsetzen der Produkte und dem Befüllen der Transportmittel das Aufnehmen der Produkte von der Produktfördervorrichtung durch die wenigstens eine Umsetzvorrichtung, insbesondere durch Ergreifen oder Ansaugen, und das anschließende Ablegen der umzusetzenden Produkte in bzw. auf die Transportmittel zu verstehen, welche durch die wenigstens eine Transportvorrichtung bewegt werden. Handelt es sich bei den Transportmitteln um Behälter, so werden diese im Zuge des Umsetzens befüllt. Im Falle eines Transportbandes werden die Produkte, wie zuvor erwähnt, einzeln oder stapelweise auf das Transportband umgesetzt. Auch dieser Fall wird als Befüllen der Transportmittel oder Befüllen des Transportbands im Sinne der Erfindung verstanden.

Im Sinne der Erfindung kann den Transportmitteln eine vorbestimmte Aufnahmekapazität zur Aufnahme von Produkten zugeordnet werden, welche als eine vorbestimmte Anzahl von Produkten pro Wegstrecke entlang der Transportrichtung der Transportvorrichtung verstanden werden kann. Sind die Transportmittel Behälter, so weist jeder Behälter eine vorbestimmte Aufnahmekapazität für Produkte auf, abhängig insbesondere von der Behältergröße, der Anzahl an Aufnahmeplätzen innerhalb des Behälters etc. Sind die Transportmittel Transportbänder, so kann die Aufnahmekapazität durch die Breite des Transportbands, die Größe der darauf abzulegenden Produkte oder/und den prozessbedingten Abstand zwischen den Produkten vorgegeben sein. Beispielsweise können entlang des Transportbands Mitnehmer angeordnet sein oder andere Abteilungen vorgesehen sein, die Aufnahmeplätze für Produkte definieren. Sind die Produkte auf dem Transportband zu stapeln, so berücksichtigt die Aufnahmekapazität eine vorbestimmte Stapelhöhe oder Anzahl an Produkten eines kompletten Stapels. Ein Befüllen der Transportmittel durch ein erfindungsgemäßes Umsetzsystem erzielt vorzugsweise ein vollständiges Befüllen der Transportmittel mit Produkten am Auslauf der Transportvorrichtung (in Transportrichtung am Ende des zweiten Abschnitts der Transportvorrichtung), was bedeutet, dass die Aufnahmekapazität der Transportmittel am Auslauf der Transportvorrichtung ausgeschöpft ist. Im Ergebnis kann beispielsweise eine Verpackungsvorrichtung am Auslauf der Transportvorrichtung zuverlässig und effektiv arbeiten.

Die Produktfördervorrichtung ist vorzugsweise als Produktband ausgebildet, auf welchem die Produkte entlang einer Beförderungsrichtung durch das erfindungsgemäße Umsetzsystem befördert werden. Dabei kann ein einzelnes, durchlaufendes Produktband oder mehrere in gleiche Richtung laufende Produktbänder bereitgestellt sein. Insbesondere können zwei oder mehr Produktbänder, welche allesamt von der Produktfördervorrichtung umfasst sind, entlang der Haupterstreckungsrichtung des Umsetzsystems parallel zueinander angeordnet sein. In diesem Fall kann jedem der parallelen Produktbänder wenigstens eine Umsetzvorrichtung zugeordnet sein. Alternativ sind anderweitige Produktfördervorrichtungen ebenfalls denkbar.

Zum Antreiben und Steuern der Produktfördervorrichtung sowie der Transportvorrichtung kann das erfindungsgemäße Umsetzsystem erste Steuerungs- und Antriebsvorrichtungen umfassen. Die ersten Steuerungs- und Antriebsvorrichtungen sind insbesondere dazu eingerichtet, die Geschwindigkeit der Produktfördervorrichtung und der Transportvorrichtung zu steuern, um die Relativgeschwindigkeit der Produkte und der Transportmittel anpassen zu können. Sollten beispielsweise zu einem spezifischen Zeitpunkt mehr Produkte auf der Produktfördervorrichtung vorhanden sein als die bereitgestellten Transportmittel aufzunehmen vermögen, so kann die Geschwindigkeit der Produktfördervorrichtung über die ersten Steuerungs- und Antriebsvorrichtungen reduziert werden, um einen Produktüberlauf zu vermeiden. Vorzugsweise wird jedoch die Geschwindigkeit der Produktfördervorrichtung konstant gehalten und gegebenenfalls die Geschwindigkeit der Transportvorrichtung angepasst. Die ersten Steuerungs- und Antriebsvorrichtungen können außerdem dazu in der Lage sein, die mittels der Transportvorrichtung bewegten Transportmittel unabhängig voneinander zu verfahren. Ebenso können Produktfördervorrichtung und/oder Transportvorrichtung während des Umsetzvorgangs gestoppt werden, sollte dies erforderlich sein.

Unter dem Bewegen der Transportmittel durch die Transportvorrichtung ist im Sinne der vorliegenden Erfindung insbesondere das Transportieren von Behältern oder das Antreiben eines Transportbandes entlang einer Transportrichtung zu verstehen. Die Produkte werden im Anschluss an das Umsetzen durch die Umsetzvorrichtung mittels der Transportmittel transportiert, also entweder in den Behältern oder auf dem Transportband.

Ferner können zum Antreiben und Steuern der Umsetzvorrichtung relativ zu der Produktfördervorrichtung und der Transportvorrichtung, d.h. zum Umsetzen der Produkte, zweite Steuerungs- und Antriebsvorrichtungen vorgesehen sein. Darüber hinaus kann zwischen den ersten und zweiten Steuerungs- und Antriebsvorrichtungen eine Rückkopplung eingerichtet sein, sodass die Umsetzgeschwindigkeit der Umsetzvorrichtung entsprechend der Beförderungsgeschwindigkeit der Produkte auf der Produktfördervorrichtung und der Transportgeschwindigkeit der Transportmittel anpassbar ist. Die zweiten Steuerungs- und Antriebsvorrichtungen können ferner dazu eingerichtet sein, basierend auf dem aktuellen Füllstand bzw. der aktuellen Füllanzahl der Transportmittel eine Priorisierung von Transportmitteln vorzunehmen. So können beispielsweise Transportmittel, welche sich bereits in einem Endabschnitt der Transportvorrichtung befinden, mit hoher Priorität bedient werden, um ein vollständiges Befüllen dieser Transportmittel zu gewährleisten.

Unter einem Umsetzbereich ist im Zusammenhang der vorliegenden Erfindung ein Bereich zu verstehen, in welchem die Umsetzvorrichtung Produkte von der Produktfördervorrichtung aufnimmt und in ein spezifisches Transportmittel umsetzt, d.h. der Arbeitsbereich der Umsetzvorrichtung in dem Umsetzsystem. Dabei kann zwischen einem potenziellen Umsetzbereich und einem tatsächlichen Umsetzbereich unterschieden werden. Unter dem potenziellen Umsetzbereich ist der maximale Arbeitsbereich der Umsetzvorrichtung zu verstehen, welchen sie durch ihre Ausleger bzw. Roboterarme bedienen könnte. Im Gegensatz dazu stellt der tatsächliche Umsetzbereich eine Begrenzung des potenziellen Umsetzbereichs dar, nämlich auf den zum Befüllen der Transportmittel benötigten Arbeitsbereich. Das Festlegen des tatsächlichen Umsetzbereichs ist insbesondere dann sinnvoll, wenn mehrere Umsetzvorrichtungen in einem Umsetzsystem bereitgestellt sind, um eine Kollisionsgefahr der Ausleger der Umsetzvorrichtungen beim Umsetzen der Produkte auszuschließen.

Erfindungsgemäß verlaufen die Produktfördervorrichtung und die Transportvorrichtung wenigstens abschnittsweise parallel zueinander. D.h., sowohl die Produktfördervorrichtung als auch die Transportvorrichtung weisen jeweils wenigstens einen Abschnitt auf, in welchem die Produkte und die Transportmittel entlang deren Beförderungs- bzw. Transportrichtungen parallel zueinander bewegt werden. Die parallelen Abschnitte erstrecken sich insbesondere entlang der Haupterstreckungsrichtung des Umsetzsystems und über den Umsetzbereich der wenigstens einen Umsetzvorrichtung. Ferner entsprechen die parallelen Abschnitte vorzugsweise wenigstens 50% der Gesamtlänge der Produktfördervorrichtung bzw. der Transportvorrichtung, besonders bevorzugt wenigstens 75%. Dadurch verlaufen Produktfördervorrichtung und Transportvorrichtung im Verhältnis zu deren Gesamtlänge besonders lange parallel, wodurch der Bewegungsablauf der Umsetzvorrichtung während des Umsetzvorgangs vereinfacht wird. Andererseits sind jedoch ebenfalls alternative Ausführungen denkbar, in welchen der genannte Wert von 50% unterschritten sein kann, da Produktbänder theoretisch beliebig lang sein könnten oder auch durch zwei Anlagen laufen könnten.

Gemäß einem wichtigen Merkmal der vorliegenden Erfindung weist die Transportvorrichtung wenigstens einen ersten Abschnitt und einen zweiten Abschnitt auf, wobei ein Transport der Produkte durch die Transportmittel (Transportrichtung) in dem ersten Abschnitt in der Beförderungsrichtung der Produktfördervorrichtung verläuft. Im Gegensatz dazu verläuft ein Transport der Produkte durch die Transportmittel (Transportrichtung) in dem zweiten Abschnitt entgegengesetzt zu der Beförderungsrichtung der Produktfördervorrichtung. Mit anderen Worten entspricht der erste Abschnitt einem relativ zu der Beförderungsrichtung der Produktfördervorrichtung gleichlaufenden Abschnitt und der zweite Abschnitt entsprechend einem gegenlaufenden Abschnitt. Folglich vereint die vorliegende Erfindung das Gleichlauf-Prinzip und das Gegenlauf-Prinzip in einem Umsetzsystem. Es hat sich nämlich überraschend gezeigt, dass die Kombination aus Gleichlauf und Gegenlauf das Umsetzen der Produkte auf Transportmittel mit hoher Effizienz ermöglicht, ohne dabei die zuvor erwähnten Nachteile des Gleichlaufs zu erhalten.

Indem sowohl der erste als auch der zweite Abschnitt als Teil einer Transportvorrichtung durch den Umsetzbereich der wenigstens einen Umsetzvorrichtung verläuft, kann diese entsprechend Transportmittel in jedem der beiden Abschnitte befüllen und bei Bedarf, also insbesondere ja nach Füllstand der Transportmittel, entweder den ersten, gleichlaufenden Abschnitt oder den zweiten, gegenlaufenden Abschnitt priorisieren. Alternativ ist es beim Einsatz mehrerer Umsetzvorrichtungen auch denkbar, dass die Umsetzvorrichtungen derart in dem Umsetzsystem angeordnet sind, dass wenigstens eine erste Umsetzvorrichtung dem ersten Abschnitt und wenigstens eine zweite Umsetzvorrichtung dem zweiten Abschnitt zugeordnet ist, d.h. exklusiv den jeweiligen Abschnitt der Transportvorrichtung bedient. In jedem Fall sind erster und zweiter Abschnitt derart angeordnet, dass sie durch den Umsetzbereich wenigstens einer Umsetzvorrichtung verlaufen. Vorzugsweise ist der erste Abschnitt der Transportvorrichtung parallel und unmittelbar benachbart zu einer der beiden Längsseiten der länglichen Produktfördervorrichtung ausgebildet, während der zweite Abschnitt der Transportvorrichtung analog dazu an der entgegengesetzten Längsseite der Produktfördervorrichtung angeordnet ist. Darüber hinaus können auch der erste und der zweite Abschnitt parallel zueinander verlaufen, insbesondere sind sie relativ zu einer Symmetrieachse, welche entlang der Haupterstreckungsrichtung der Produktfördervorrichtung durch dessen Zentrum verläuft, entlang des Umsetzbereichs der Umsetzvorrichtung analog oder ungefähr spiegelsymmetrisch zueinander ausgebildet.

Optional können der erste Abschnitt und/oder der zweite Abschnitt entlang des Umsetzbereichs der wenigstens einen Umsetzvorrichtung im Wesentlichen die gleiche Länge wie das Produktfördervorrichtung aufweisen. Die Gesamtlänge des ersten und des zweiten Abschnitts kann ferner gleich oder unterschiedlich sein, wobei im letzteren Fall vorzugsweise der zweite Abschnitt länger als der erste Abschnitt ausgebildet ist, sodass der gegenlaufende Abschnitt der Transportvorrichtung verhältnismäßig größer als der gleichlaufende Abschnitt sein kann.

Der Transport der Transportmittel mittels der Transportvorrichtung durch den Umsetzbereich der Umsetzvorrichtung beginnt insbesondere in dem ersten Abschnitt und endet in dem zweiten Abschnitt, wodurch die Transportmittel zuerst in der Beförderungsrichtung der Produktfördervorrichtung und danach entgegengesetzt zu der Beförderungsrichtung der Produktfördervorrichtung bewegt werden können. Folglich durchlaufen die Transportmittel beim Initiieren eines Umsetzvorgangs als erstes den gleichlaufenden Abschnitt und abschließend den gegenlaufenden Abschnitt.

Im Gegensatz zu bekannten Gegenlauf-Umsetzsystemen hat das erfindungsgemäße Umsetzsystem den Vorteil, dass die wenigstens eine Umsetzvorrichtung beidseitig, d.h. relativ zu der Haupterstreckungsrichtung der Produktfördervorrichtung zu beiden Längsseiten davon hin, Produkte von der Produktfördervorrichtung auf die Transportmittel umsetzen kann, welche den ersten und den zweiten Abschnitt der Transportvorrichtung durchlaufen, dabei jedoch nur eine Transportvorrichtung verwendet werden muss. Folglich können gegenüber herkömmlichen Gegenlauf-Umsetzsystemen bei gleichbleibender Effizienz sowohl Platz als auch Kosten eingespart werden.

In einer bevorzugten Ausführungsform des erfindungsgemäßen Umsetzsystems kann zwischen dem wenigstens einen ersten Abschnitt und dem wenigstens einen zweiten Abschnitt ein dritter Abschnitt der Transportvorrichtung verlaufen, welcher dazu eingerichtet ist, die umgesetzten Produkte von dem ersten Abschnitt in den zweiten Abschnitt zu überführen. Der dritte Abschnitt fungiert demnach als Übergang zwischen dem ersten, gleichlaufenden Abschnitt und dem zweiten, gegenlaufenden Abschnitt, welche als Teil der Transportvorrichtung entlang der Produktfördervorrichtung insbesondere parallel zueinander verlaufen können, und verbindet diese. Hierbei ist der dritte Abschnitt dazu eingerichtet, den reibungslosen Übergang zwischen dem ersten Abschnitt und dem zweiten Abschnitt der Transportvorrichtung zu gewährleisten, wobei sich die Produkte sowie entsprechend dazu Transportmittel während des Transports in dem dritten Abschnitt relativ zu der Beförderungsrichtung der Produktfördervorrichtung auf dem Transportband weder gleichlaufend noch gegenlaufend bewegen können.

Optional kann der dritte Abschnitt der Transportvorrichtung an einem stirnseitigen Ende des Umsetzsystems angeordnet sein, sodass die Transportvorrichtung an dem Umsetzsystem stirnseitig umlaufend ausgebildet ist. Mit anderen Worten kann die Transportvorrichtung das Umsetzsystem bzw. die Produktfördervorrichtung durch den ersten und zweiten Abschnitt an den beiden Längsseiten und zusätzlich durch den dritten Abschnitt an einer Stirnseite der Produktfördervorrichtung umgeben. Unter der Stirnseite der Produktfördervorrichtung ist in diesem Zusammenhang das Ende der Produktfördervorrichtung entlang dessen Beförderungsrichtung zu verstehen.

In einer weiteren Ausführungsform des erfindungsgemäßen Umsetzsystems können der erste, zweite und dritte Abschnitt der Transportvorrichtung in einer Draufsicht auf das Umsetzsystem eine U-förmige Anordnung bilden. Die U-förmige Anordnung kann dabei beispielsweise einer rechtwinkligen Anordnung entsprechen, bei welcher der erste und der zweite Abschnitt parallel zueinander verlaufen und der dritte Abschnitt jeweils rechtwinklig dazu angeordnet ist. In diesem Fall kann zwischen dem ersten und dem dritten Abschnitt sowie zwischen dem dritten und dem zweiten Abschnitt jeweils ein Übergangsbereich vorgesehen sein, in welchem die Orientierung der Transportmittel auf der Transportvorrichtung entsprechend des nachfolgenden Bereichs ausgerichtet wird. Die rechtwinklige Anordnung des dritten Abschnitts unmittelbar angrenzend an das stirnseitige Ende der Produktfördervorrichtung ist dabei besonders platzsparend. Alternativ kann der dritte Abschnitt in der Draufsicht auch bogenförmig ausgebildet sein oder wenigstens einen bogenförmigen Übergangsbereich aufweisen, sodass die Transportmittel mittels des dritten Abschnitts von dem ersten Abschnitt der Transportvorrichtung ohne Weiteres in den zweiten Abschnitt der Transportvorrichtung bewegt werden können.

Zum Überführen der Produkte von dem ersten Abschnitt in den zweiten Abschnitt kann der dritte Abschnitt ferner mit Handhabungsmitteln ausgebildet sein, wobei die Handhabungsmittel wenigstens eines umfassen, ausgewählt aus der Gruppe aus: Glieder- oder Bogenketten, Kurvenbänder oder einem Roboter. Die Handhabungsmittel sind insbesondere dazu eingerichtet, die Produkte und/oder die Transportmittel in dem ersten Abschnitt einzeln, gruppenweise oder stapelweise zu erfassen und in den zweiten Abschnitt zu befördern, beispielsweise durch Umsetzen von gestapelten Produkten oder durch Umsetzen der Transportmittel. Insofern die Transportmittel in Form von zu befüllenden Behältern vorliegen, können die Handhabungsmittel als Roboter ausgebildet sein. Insbesondere kann es sich hierbei um einen Industrieroboter mit Manipulator und Effektor handeln, welcher die Behälter beispielsweise ergreift oder ansaugt und dadurch in der Lage ist, die Behälter von dem ersten Abschnitt in den zweiten Abschnitt umzusetzen. Bei der Verwendung eines Transportbandes ist hingegen die Ausgestaltung der Handhabungsmittel als Bogenkette oder Kurvenband bevorzugt.

In einer optionalen Ausführungsform des erfindungsgemäßen Umsetzsystems kann der Umsetzbereich der wenigstens einen Umsetzvorrichtung den ersten und den zweiten Abschnitt der Transportvorrichtung oder den ersten, den zweiten und den dritten Abschnitt der Transportvorrichtung umfassen. Gewünschtenfalls kann die Umsetzvorrichtung somit dazu in der Lage sein, die Transportmittel neben dem ersten und zweiten Abschnitt auch in dem dritten Abschnitt zu befüllen. In diesem Zusammenhang kann optional eine eigenständige Umsetzvorrichtung vorgesehen sein, welche die Produkte von dem Ende der Produktfördervorrichtung oder gegebenenfalls Produkte, welche von dem Ende der Produktfördervorrichtung in einen nachgelagerten Auffangbereich befördert worden sind, in die in dem dritten Abschnitt befindlichen Transportmittel umsetzt.

Insofern das erfindungsgemäße Umsetzsystem lediglich eine Umsetzvorrichtung umfasst, kann diese dazu eingerichtet sein, Transportmittel sowohl in dem ersten Abschnitt als auch in dem zweiten Abschnitt der Transportvorrichtung zu befüllen. In diesem Fall ist die Umsetzvorrichtung dazu in der Lage, die Produkte beidseitig von der Produktfördervorrichtung in den ersten oder in den zweiten Abschnitt umzusetzen. Sollten mehrere Umsetzvorrichtungen vorgesehen sein, so kann insbesondere die in Transportrichtung der Transportmittel letzte Umsetzvorrichtung die zuvor genannte Eigenschaft aufweisen. Alternativ kann die wenigstens eine Umsetzvorrichtung nur dem ersten Abschnitt oder nur dem zweiten Abschnitt der Transportvorrichtung zugeordnet sein. D.h., dass ein festgelegter, tatsächlicher Umsetzbereich der entsprechenden Umsetzvorrichtung entweder auf wenigstens einen Teilabschnitt des ersten Abschnitts oder auf wenigstens einen Teilabschnitt des zweiten Abschnitts begrenzt ist. Diese Ausführungsform ist insbesondere dann praktikabel, wenn mehrere Umsetzvorrichtungen entlang der Haupterstreckungsrichtung der Produktfördervorrichtung gruppenweise, beispielsweise in Zweiergruppen, angeordnet sind, sodass eine erste Umsetzvorrichtung aus einer Gruppe von Umsetzvorrichtungen den ersten Abschnitt bedient und eine zweite Umsetzvorrichtung aus der Gruppe von Umsetzvorrichtungen dem zweiten Abschnitt zugeordnet ist. Zusätzlich kann eine entlang der Transportrichtung der Transportmittel letzte Umsetzvorrichtung dem zweiten Abschnitt der Transportvorrichtung zugeordnet sein.

In einer bevorzugten Ausführungsform des erfindungsgemäßen Umsetzsystems ist nachfolgend zu dem zweiten Abschnitt der Transportvorrichtung wenigstens eine Handhabungseinheit angeordnet ist, welche dazu eingerichtet ist, die Produkte oder die mit Produkten befüllten Transportmittel zu handhaben. Unter dem Handhaben der Produkte oder der Transportmittel ist insbesondere deren Abtransport von der Transportvorrichtung und deren Weiterverarbeitung, beispielsweise deren Verpackung, zu verstehen. Die Handhabungseinheit ist vorzugsweise derart nachgelagert zu der Transportvorrichtung angeordnet, dass sie wenigstens einseitig zugänglich ist, um beispielsweise manuell bedient und gewartet werden zu können.

Ferner kann die Transportvorrichtung des erfindungsgemäßen Umsetzsystems Transportschlitten umfassen, welche entlang der Transportvorrichtung unabhängig voneinander verfahrbar sind, wobei jeder Transportschlitten dazu eingerichtet ist, wenigstens ein Transportmittel, insbesondere wenigstens einen zu befüllenden Behälter, zu bewegen. Die Transportschlitten können über einen mechanischen Antrieb, beispielsweise mittels Zahnstange und Ritzel, oder einen elektrischen Antrieb durch die Transportvorrichtung angetrieben werden. Die Transportschlitten können je nach Größe und Form der Transportmittel anpassbar sein und beispielsweise eine transportmittelspezifische Aufnahme oder Ablage umfassen, um ein Transportmittel sicher auf einem Transportschlitten zu transportieren. Dadurch, dass die Transportschlitten unabhängig voneinander verfahrbar sind, kann die Transportgeschwindigkeit einzelner Transportmittel individuell angepasst werden. Somit können beispielsweise bereits vollständig befüllte Transportmittel beschleunigt transportiert werden, um diese aus der Transportvorrichtung abzuführen.

Optional kann die Transportvorrichtung wenigstens eine erste Führungsbahn und wenigstens eine zweite Führungsbahn umfassen, welche jeweils dazu eingerichtet sind, eine Mehrzahl von Transportschlitten aufzunehmen und unabhängig voneinander zu verfahren, wobei die erste Führungsbahn diejenigen Transportschlitten aufnimmt, welche mit Produkten zu befüllende Transportmittel bewegen, und die zweite Führungsbahn diejenigen Transportschlitten aufnimmt, welche leere Transportmittel zu einem Anfang der Führungsbahn rückführt. Ferner können die erste und die zweite Führungsbahn innerhalb der Transportvorrichtung übereinander oder nebeneinander angeordnet sein. Die erste und die zweite Führungsbahn können somit parallel zueinander betrieben werden und dafür sorgen, dass am Anfang der Transportvorrichtung konstant ausreichend Führungsschlitten vorhanden sind. Demnach bilden die beiden Führungsbahnen eine Art Kreislaufsystem zum Transportieren der Transportschlitten. Die leeren Transportmittel, welche mittels der Transportschlitten über die zweite Führungsbahn rückgeführt werden, können beispielsweise über spezifisch dafür vorgesehene Greif- oder Saugeinheit von den Transportschlitten eingegriffen werden.

In einer weiteren Ausführungsform des erfindungsgemäßen Umsetzsystems kann die Transportvorrichtung dazu eingerichtet sein, eine Transportrichtung der Transportmittel zu invertieren. Mit anderen Worten können die Transportmittel, optional über die Transportschlitten, auf den Führungsbahnen vorwärts und rückwärts bewegt werden. Wird die Transportrichtung der Transportmittel invertiert, so wird folglich der erste Abschnitt zum gegenlaufenden Abschnitt und der zweite Abschnitt zum gleichlaufenden Abschnitt. Das Invertieren der Transportrichtung kann insbesondere durchgeführt werden, ohne dass der Umsetzvorgang unterbrochen oder gestoppt werden muss, wobei die Effizienz des Umsetzsystems konstant aufrechterhalten wird.

Ferner kann eine zweite Handhabungseinheit bereitgestellt sein, welche analog zu der zuvor erwähnten, ersten Handhabungseinheit eingerichtet ist. Die zweite Handhabungseinheit kann an dem Anfang der Transportvorrichtung bzw. der ersten Führungsbahn angeordnet sein, sodass im Falle der Invertierung der Transportrichtung der Transportmittel von der ersten Handhabungseinheit auf die zweite Handhabungseinheit umgeschaltet werden kann und die befüllten Transportmittel folglich nach Verlassen des ersten Abschnitts in die zweite Handhabungseinheit gelangen.

Um einen Ausfall der Transportvorrichtung, welcher beispielsweise durch technische Defekte während des Betriebs entstehen kann, ohne Effizienz- bzw. Leistungsverlust des Umsetzsystems kompensieren zu können, kann die Transportvorrichtung des erfindungsgemäßen Umsetzsystems in einer bevorzugten Ausführungsform eine erste Transportvorrichtung und eine von der ersten Transportvorrichtung separate zweite Transportvorrichtung umfassen. Die erste Transportvorrichtung und die zweite Transportvorrichtung können dabei jeweils wenigstens einen ersten Abschnitt aufweisen, entlang welchem ein Transport der Produkte durch die Transportmittel in der Beförderungsrichtung der Produktfördervorrichtung verläuft, und können wenigstens einen zweiten Abschnitt aufweisen, entlang welchem ein Transport der Produkte durch die Transportmittel entgegengesetzt zu der Beförderungsrichtung der Produktfördervorrichtung verläuft. Somit sind zwei separate Transportvorrichtungen bereitgestellt, die von der Umsetzvorrichtung wahlweise mit Produkten beschickt werden können, so dass ein redundantes Umsetzsystem bereitgestellt wird.

Insbesondere kann nachfolgend dem zweiten Abschnitt der ersten Transportvorrichtung eine erste Handhabungseinheit angeordnet sein, welche dazu eingerichtet ist, die von der ersten Transportvorrichtung transportierten Produkte zu handhaben, insbesondere zu verpacken, und nachfolgend zu dem zweiten Abschnitt der zweiten Transportvorrichtung kann eine zweite Handhabungseinheit angeordnet sein, welche dazu eingerichtet ist, die von der zweiten Transportvorrichtung transportierten Produkte zu handhaben, insbesondere zu verpacken. Auf diese Weise werden auch die Handhabungseinheiten redundant bereitgestellt.

Platzsparend und gleichzeitig für die Umsetzvorrichtung gut zugänglich können die beiden redundanten Transportvorrichtungen derart an der Produktfördervorrichtung angeordnet werden, dass der erste Abschnitt der ersten Transportvorrichtung und der erste Abschnitt der zweiten Transportvorrichtung relativ einer Längsmittelachse der Produktfördervorrichtung auf unterschiedlichen Seiten der Produktfördervorrichtung angeordnet sind, oder/und dass der zweite Abschnitt der ersten Transportvorrichtung und der zweite Abschnitt der zweiten Transportvorrichtung relativ einer Längsmittelachse der Produktfördervorrichtung auf unterschiedlichen Seiten der Produktfördervorrichtung angeordnet sind, oder/und dass die erste Handhabungseinheit und die zweite Handhabungseinheit relativ einer Längsmittelachse der Produktfördervorrichtung auf unterschiedlichen Seiten der Produktfördervorrichtung angeordnet sind.

Bei der ersten Transportvorrichtung handelt es sich insbesondere um die zuvor beschriebene Transportvorrichtung, wobei die zweite Transportvorrichtung im Wesentlichen dieselben Merkmale und Eigenschaften aufweist. Auch die Handhabungseinheiten können gemäß den zuvor beschriebenen Prinzipien mit der jeweiligen Transportvorrichtung gekoppelt sein. Zusätzlich kann die unmittelbar auf den zweiten Abschnitt der ersten Transportvorrichtung nachfolgende erste Handhabungseinheit zugleich mit der zweiten Transportvorrichtung gekoppelt sein und die unmittelbar auf den ersten Abschnitt der ersten Transportvorrichtung ebenfalls entsprechend mit der zweiten Transportvorrichtung gekoppelt sein, sodass bei Invertierung der Transportrichtung der Transportmittel durch die erste oder die zweite Transportvorrichtung die Handhabung der befüllten Transportmittel gewährleistet ist.

Fällt nun die erste Transportvorrichtung oder/und eine der beiden Handhabungseinheiten beispielsweise aufgrund eines technischen Defekts oder Wartungsarbeiten aus oder steht die erste Transportvorrichtung aus anderweitigen betrieblichen Gründen still, so kann stattdessen die zweite Transportvorrichtung aktiviert werden und die wenigstens eine Umsetzvorrichtung dazu veranlasst werden, anstelle der Transportmittel auf der ersten Transportvorrichtung, Transportmittel auf der zweiten Transportvorrichtung zu befüllen. Alternativ können die erste und die zweite Transportvorrichtung auch simultan betrieben werden.

In einer optionalen Ausführungsform kann das erfindungsgemäß Umsetzsystem wenigstens eine Kamera oder einen Sensor umfassen, welche/welcher das Umsetzen der Produkte in dem Umsetzbereich der wenigstens einen Umsetzvorrichtung überwacht. Die Kamera oder der Sensor können insbesondere dazu eingerichtet sein, den ersten, zweiten und dritten Abschnitt der Transportvorrichtung inklusive der bewegten Transportmittel sowie ferner die Produkte auf der Produktfördervorrichtung zu überwachen. Anhand der von der Kamera bzw. dem Sensor bereitgestellten Daten kann die Steuerung der Transportvorrichtung sowie die Umsetzgeschwindigkeit und das Ansteuern spezifischer Transportmittel durch die Umsetzvorrichtung eingestellt werden. Entsprechend kann auch eine Anpassung der Transportgeschwindigkeit der Transportschlitten in den verschiedenen Abschnitten der Transportvorrichtung geregelt werden.

Erkennt die Kamera bzw. der Sensor beispielsweise, dass ein oder mehrere Transportmittel am Ende bzw. Auslauf des gegenlaufenden Abschnitts noch nicht vollständig befüllt sind, so kann die Umsetzvorrichtung, welche für diesen Abschnitt zuständig ist, entsprechend angesteuert werden, um das vollständige Befüllen der Transportmittel zu gewährleisten. Durch Rückkopplung mit der Kamera bzw. dem Sensor entsteht dadurch ein Notfallsystem, welches insbesondere Produktüberstände an Produkten auf der Produktfördervorrichtung sowie unvollständig gefüllte Transportmittel erkennt und entsprechende Gegenmaßnahmen einleitet. Es ist darüber hinaus ebenfalls denkbar, dass die Kamera bzw. der Sensor zur Überwachung der wenigstens einen Handhabungseinheit eingerichtet ist.

Ferner kann jede Umsetzvorrichtung des Umsetzsystems mit einer eigenen Kamera oder einem eigenen Sensor bereitgestellt sein, welche/welcher dazu eingerichtet ist, einen Füllstand eines spezifischen Transportmittels zu bestimmen, insbesondere unmittelbar bevor und/oder unmittelbar nach einem Befüllen dieses Transportmittels mit einem Produkt. Die Umsetzvorrichtungen können daraufhin kontinuierlich die bestimmten Füllstände der Transportmittel an die ersten und zweiten Steuerungs- und Antriebsvorrichtungen melden, sodass die Füllstände jeglicher sich in dem Umsetzsystem befindlichen Transportmittel automatisch erfasst und somit überwacht werden können. Sollte eine der Umsetzvorrichtungen des Umsetzsystems ausfallen, so können die restlichen aktiven Umsetzvorrichtungen anhand der Informationen über die aktuell vorliegenden Füllstände entsprechend angesteuert werden, um das Befüllen aller Transportmittel zu gewährleisten.

Die vorliegende Aufgabe wird in einem zweiten Aspekt durch ein Verfahren zum Umsetzen von Produkten auf Transportmittel mittels wenigstens einer Umsetzvorrichtung eines Umsetzsystems gelöst, wobei das Verfahren ein Bewegen der zu befüllenden Transportmittel mittels wenigstens einer Transportvorrichtung durch wenigstens einen Umsetzbereich, in welchem die Umsetzvorrichtung angeordnet ist, und ein Befüllen der Transportmittel umfasst, indem die Umsetzvorrichtung Produkte von wenigstens einer bewegten Produktfördervorrichtung, welche wenigstens abschnittsweise parallel zu der Transportvorrichtung verläuft, in die zu befüllenden Transportmittel umsetzt, wobei die Produkte auf die Transportmittel sowohl in einem ersten Abschnitt umgesetzt werden, entlang welchem ein Transport der Produkte durch die Transportmittel in einer Beförderungsrichtung der Produktfördervorrichtung verläuft, als auch in einem zweiten Abschnitt der Transportvorrichtung umgesetzt werden, entlang welchem ein Transport der Produkte durch die Transportmittel entgegengesetzt zu der Beförderungsrichtung der Produktfördervorrichtung verläuft.

Das erfindungsgemäß Verfahren kann insbesondere mit einem Umsetzsystem gemäß dem ersten Aspekt durchgeführt werden, wobei an dieser Stelle explizit darauf hingewiesen sei, dass sämtliche in Bezug auf den ersten und zweiten Aspekt beschriebenen Merkmale, Effekte und Vorteile auch auf den jeweiligen anderen Aspekt anwendbar und kombinierbar sein können.

Demzufolge können die Transportmittel mittels der Transportvorrichtung von dem ersten Abschnitt über einen dritten Abschnitt der Transportvorrichtung zu dem zweiten Abschnitt bewegt werden, wobei der dritte Abschnitt vorzugsweise derart an einem stirnseitigen Ende des Umsetzsystems angeordnet ist, dass sich die Transportvorrichtung stirnseitig umlaufend um das Umsetzsystem erstreckt.

Optional können die ersten Steuerungs- und Antriebsvorrichtungen zum Antreiben der Produktfördervorrichtung und der Transportvorrichtung eingerichtet sein und die Beförderungsgeschwindigkeit der Produkte auf der Produktfördervorrichtung kann unabhängig von der Umsetzgeschwindigkeit der Umsetzvorrichtung in dem ersten und dem zweiten Abschnitt der Transportvorrichtung geregelt werden. Folglich können eine oder mehrere Relativgeschwindigkeiten einstellbar sein, welche sich auf die Transportgeschwindigkeit der einzelnen Transportmittel, optional auf den Transportschlitten der Transportvorrichtung, in den einzelnen Abschnitten beziehen.

Insbesondere kann die Transportgeschwindigkeit der Transportmittel anhand der Umsetzgeschwindigkeit der entlang der Transportrichtung der Transportmittel letzten Umsetzvorrichtung geregelt werden. Diese Umsetzvorrichtung wird auch als Master-Umsetzvorrichtung bezeichnet, da sie als letzte Umsetzvorrichtung dafür zuständig ist, unvollständig befüllte Transportmittel abschließend zu befüllen. Sollten zu einem beliebigen Zeitpunkt überdurchschnittlich viele unvollständig befüllte Transportmittel in dem Umsetzbereich der letzten Umsetzvorrichtung vorhanden sein, so kann beispielsweise die Beförderungsgeschwindigkeit der Produkte und/oder die Transportgeschwindigkeit der Transportmittel reduziert werden. Andernfalls kann die Beförderungsgeschwindigkeit erhöht werden, wenn relativ zu der vorhandenen Menge an Produkten ein Überschuss an verfügbaren bzw. nicht vollständig ausgelasteten Umsetzvorrichtungen vorhanden ist.

In einer weiteren Ausführungsform des erfindungsgemäßen Verfahrens kann die wenigstens eine Umsetzvorrichtung über die zweiten Steuerungs- und Antriebsvorrichtungen derart gesteuert werden, dass das Befüllen eines Transportmittels priorisiert wird, solange sich das Transportmittel in dem ersten Abschnitt der Transportvorrichtung befindet. Demnach wird eine größtmögliche Befüllung der Transportmittel in dem gleichlaufenden Abschnitt angestrebt, wodurch weniger Zeit zum vollständigen Befüllen der Transportmittel in dem gegenlaufenden Abschnitt aufgebracht werden muss. Dies reduziert insbesondere die Arbeitsauslastung der in der Transportrichtung der Transportmittel letzten Umsetzvorrichtung, wodurch wiederum das Risiko von unvollständig befüllten Transportmitteln gesenkt wird.

In einer bevorzugten Ausführungsform des erfindungsgemäßen Verfahrens kann die Transportvorrichtung eine erste Transportvorrichtung und eine von der ersten Transportvorrichtung separate zweite Transportvorrichtung umfassen, wie oben bereits in einer Variante des ersten Aspekts beschrieben. Der Betrieb eines solchen Umsetzsystems kann dann in einem Verfahren des zweiten Aspekts der Erfindung umschaltbar sein zwischen einem ersten Betriebsmodus, in welchem die Umsetzvorrichtung die Produkte nur auf Transportmittel der ersten Transportvorrichtung umsetzt, während die zweite Transportvorrichtung oder/und die zweite Handhabungseinrichtung vorzugsweise inaktiv ist/sind, und einem zweiten Betriebsmodus, in welchem die Umsetzvorrichtung die Produkte nur auf Transportmittel der zweiten Transportvorrichtung umsetzt, während die erste Transportvorrichtung oder/und die erste Handhabungseinrichtung vorzugsweise inaktiv ist/sind.

Insbesondere kann ein Umschalten von dem ersten Betriebsmodus in den zweiten Betriebsmodus im Wesentlichen ohne Unterbrechung der Bewegung der Produktfördervorrichtung erfolgen, insbesondere um bei Wartung oder Ausfall einer mit der ersten Transportvorrichtung assoziierten Komponente, beispielsweise einer Handhabungseinheit, unterbrechungsfrei von der ersten Transportvorrichtung auf die zweite Transportvorrichtung schalten zu können.

Denkbar ist in diesem Zusammenhang, dass ein erster Betriebsmodus vorgesehen ist, in welchem die wenigstens eine Umsetzvorrichtung eine erste, aktive Transportvorrichtung bedient. Fällt die erste Transportvorrichtung nun aus oder wird aus anderweitigen Gründen stillgesetzt, so aktiviert das Umsetzsystem einen zweiten Betriebsmodus. In diesem zweiten Betriebsmodus wechselt die wenigstens eine Umsetzvorrichtung von der ersten Transportvorrichtung zu der zweiten Transportvorrichtung und bedient fortan lediglich letztere. Optional kann ein dritter Betriebsmodus eingerichtet sein, in welchem die wenigstens eine Umsetzvorrichtung sowohl die erste Transportvorrichtung als auch die zweite Transportvorrichtung bedient.

Insofern das Umsetzsystem eine Mehrzahl von Umsetzvorrichtungen umfasst, können bei Ausfall einer Umsetzvorrichtung die restlichen aktiven Umsetzvorrichtungen derart angesteuert werden, dass ein effizienter Betrieb des Umsetzsystems gewährleistet werden kann, gegebenenfalls durch Wechseln von der ersten Transportvorrichtung auf die zweite Transportvorrichtung oder umgekehrt.

Ferner können spezifische Füllstände der Transportmittel in jeweils dem ersten und dem zweiten, gegebenenfalls auch in dem dritten Abschnitt der Transportvorrichtung vorgesehen sein, sodass die Umsetzvorrichtung ein Transportmittel beispielsweise zu 50% in dem ersten, gleichlaufenden Abschnitt befüllt und die restlichen 50% in dem zweiten, gegenlaufenden Abschnitt. Es ist ebenso denkbar, dass spezifische Transportmittel oder spezifische Teile des Transportmittels nur in einem der Abschnitte befüllt werden, beispielsweise dass alternierend jeder zweite Behälter in entweder dem ersten oder dem zweiten Abschnitt befüllt wird.

Des Weiteren kann eine Füllreihenfolge festgelegt sein, in welcher die Umsetzvorrichtungen die Transportmittel befüllen. Insofern die Transportmittel in Form von Behältern ausgebildet sind, kann beispielsweise eine entlang der Transportrichtung der Transportmittel erste Umsetzvorrichtung in jedem der transportierten Behälter stets eine erste spezifische Füllposition innerhalb des Behälters befüllen, während die nachfolgende Umsetzvorrichtung stets eine zweite spezifische Füllposition bedient, usw. Diese Füllreihenfolge kann auch dann weiterverfolgt werden, wenn eine der Umsetzvorrichtungen ausfällt. Im Allgemeinen kann der Umsetzvorgang in Bezug auf Umsetz- und Transportgeschwindigkeit entsprechend der Menge an Produkten auf der Produktfördervorrichtung angepasst werden.

Hierzu sei abschließend angemerkt, dass sowohl das Umsetzsystem des ersten Aspekts als auch das Verfahren gemäß dem zweiten Aspekt ein effizientes Befüllen der Transportmittel ermöglicht, bei welchem die Anzahl der Handhabungseinheiten je nach Bedarf variiert werden kann, wobei insbesondere auch bei Verwendung einer einzelnen Handhabungseinheit die maximale Leistungsfähigkeit gewährleistet ist. Folglich kann das Umsetzsystem verhältnismäßig kleiner ausgebildet werden, d.h. im Gegensatz zu herkömmlichen Gegenlauf-Umsetzsystemen insbesondere eine kürzere Produktfördervorrichtung und weniger Umsetzvorrichtungen umfassen.

Im Folgenden wird die erfindungsgemäße Umsetzvorrichtung in größerem Detail anhand von Ausführungsbeispielen mit Bezug auf die begleitenden Zeichnungen beschrieben. Es stellt dar:
- Figur 1: eine Draufsicht eines Ausschnitts eines erfindungsgemäßen Umsetzsystems gemäß einem ersten Ausführungsbeispiel;
- Figur 2: eine Querschnittsansicht des Umsetzsystems aus Figur 1;
- Figur 3: eine Draufsicht auf ein Umsetzsystem mit einer Transportvorrichtung gemäß dem ersten Ausführungsbeispiel; und
- Figur 4: eine Draufsicht auf ein Umsetzsystem mit erster und zweiter Transportvorrichtung gemäß einem zweiten Ausführungsbeispiel.

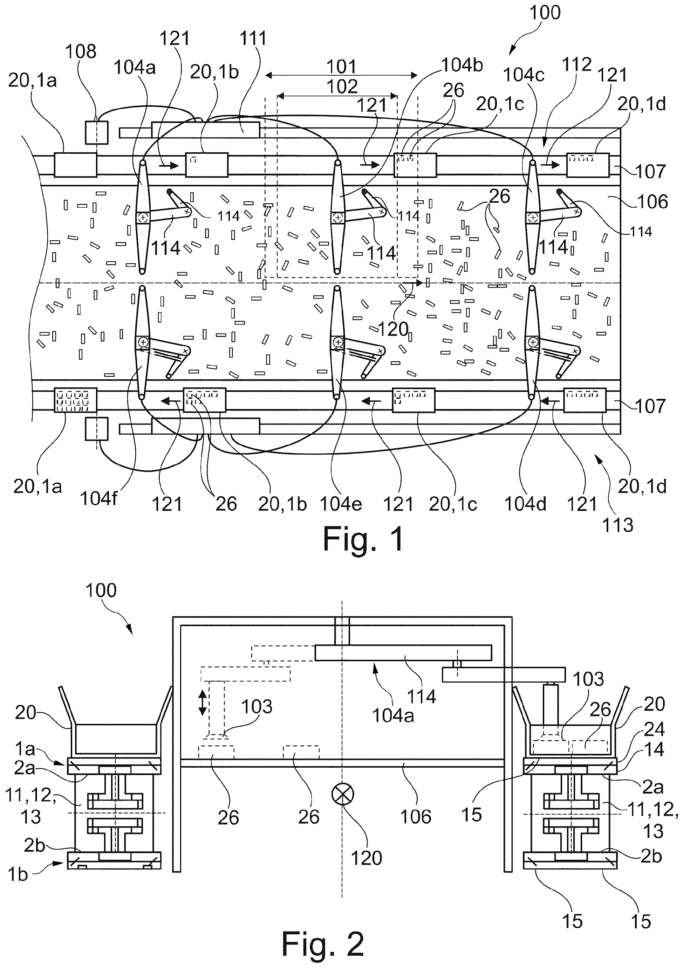

In der Figur 1 ist in einer Draufsicht ein Ausschnitt eines erfindungsgemäßen Umsetzsystems 100 gemäß einem ersten Ausführungsbeispiel veranschaulicht, welches zum Befüllen von Transportmittel 20 eingerichtet ist. Die Transportmittel 20 sind hier exemplarisch in Form von Behältern dargestellt. Diese Behälter 20 werden über eine Transportvorrichtung 107 in einer Transportrichtung 121 bewegt. Das Umsetzsystem 100 umfasst ferner mehrere Umsetzvorrichtungen 104 bzw. 104a - 104f, hier insgesamt sechs Stück, welche jeweils über hier nicht dargestellte Aufhängungen in dem Umsetzsystem 100 angeordnet sind. Die Anzahl, Anordnung und Ausgestaltung der Umsetzvorrichtungen 104a - 104f kann je nach Bedarf und insbesondere je nach Größe des Umsetzsystems 100 variiert werden. Vorliegend sind die Umsetzvorrichtungen 104 beispielsweise mit Auslegern 114 ausgebildet.

Auf einer Produktfördervorrichtung 106, welche sich in Figur 1 in der Beförderungsrichtung 120 der Produktfördervorrichtung 106 von links nach rechts bewegt, werden Produkte 26 angeliefert, welche unregelmäßig verteilt und in unterschiedlichen Drehlagen auf der Produktfördervorrichtung 106 angeordnet sind.

Mit Hilfe der mehreren entlang der Produktfördervorrichtung 106 beabstandet angeordneten Umsetzvorrichtungen 104a - 104f werden diese Produkte 26 in der richtigen Position und Drehlage in die dafür vorgesehenen Behälter 20 umgesetzt, welche sich in diesem Fall in der Transportrichtung 121 der Transportvorrichtung 107 parallel zur Produktfördervorrichtung 106 bewegen.

Zu diesem Zweck sind die Behälter 20 auf Transportschlitten 1 bzw. 1a, 1b, 1c der Transportvorrichtung 107 angeordnet und werden vorzugsweise während des Transports mittels der in Figur 2 gezeigten Saugköpfe 103 der Umsetzvorrichtungen 104a - 104f befüllt, welche ein passendes Produkt 26 in ihrem Umsetzbereich 102 auf der Produktfördervorrichtung 106 ansaugen bzw. ergreifen, anheben und in einer passenden, freien Füllposition eines Behälters 20 ablegen. Dieser Ablauf ist in Figur 2 schematisch anhand der Umsetzvorrichtung 104a dargestellt.

Die Bewegungen der Umsetzvorrichtungen 104 sowie der einzelnen Schlitten 1a, 1b, 1c der Transportvorrichtung 107 und gegebenenfalls auch die Geschwindigkeit der Produktfördervorrichtung 106 werden durch Steuerungs- und Antriebsvorrichtungen 111 gesteuert. Eingangsinformationen werden mittels eines Sensors oder einer Kamera 108, beispielsweise einer Zeilenkamera, vor dem Einlauf der Produkte 26 in den Bereich der Umsetzvorrichtungen 104 ständig in Bezug auf Anzahl, Position und Drehlage der unter der abtastenden, quer über die gesamte Transportrichtung liegende Linie ermittelt und den Steuerungs- und Antriebsvorrichtungen 111 gemeldet, welche daraus unter Berücksichtigung der vorhandenen Geschwindigkeiten der Produktfördervorrichtung 106 als auch der Transportschlitten 1a, 1b, 1c die einzelnen Umsetzvorrichtungen 104a - 104f steuern. Die Steuerung der Produktfördervorrichtung 106, insbesondere dessen Beförderungsgeschwindigkeit, kann jedoch auch von separaten Steuerungs- und Antriebsvorrichtungen (nicht dargestellt) durchgeführt werden.

Für den Normalbetrieb ist dabei für jede Umsetzvorrichtung 104 ein frei gegebener, tatsächlicher Umsetzbereich 102 in Beförderungsrichtung 120 festgelegt, welcher zur Vermeidung einer Kollision mit benachbarten Umsetzvorrichtungen 104a - 104f dient. Der potenzielle Umsetzbereich 101 jeder Umsetzvorrichtung 104 ist dagegen deutlich größer, und kann von den Steuerungs- und Antriebsvorrichtungen 111 in Einzelfällen freigegeben werden, was dann jedoch eine entsprechende Steuerung der benachbarten Umsetzvorrichtungen 104 erfordert, um Kollisionen zu vermeiden.

Die die Behälter 20 tragenden Transportschlitten 1a , 1b, 1c, welche auf derselben Transportvorrichtung 107 geführt werden, können unabhängig voneinander verfahren werden, und müssen auch nicht in der gleichen Transportrichtung 121 bewegt werden, sodass ein einzelner Behälter 20 mit dem ihn tragenden Transportschlitten z. B. 1b sich kurzzeitig auch in Gegenrichtung zu den übrigen auf derselben Transportvorrichtung 107 laufenden Schlitten 1a und 1c bewegen kann.

Wie in den Schnittdarstellungen durch die Transportvorrichtung 107 in der Figur 2 ersichtlich, besteht die Transportvorrichtung 107 aus einem Bahnkörper 11, 12, 13 mit einem in diesem Fall im Wesentlichen rechteckigen Querschnitt, an welchem sowohl auf der Oberseite als auf der Unterseite des Bahnkörpers 11, 12, 13 eine Führungsbahn 2a, 2b ausgebildet ist, auf der jeweils die Transportschlitten 1 verfahrbar sind.

Dabei dient die obere Führungsbahn 2a dem Transportieren von Transportmitteln bzw. Behältern 20, welche mittels der Saugköpfe 103 der Umsetzvorrichtungen 104 mit Produkten 26 befüllt werden, während die untere Führungsbahn 2b dem Rücktransport der leeren Transportschlitten z. B. 1b an den Beginn der Transportvorrichtung 107 dient. Damit die Transportschlitten 1 auch innerhalb derselben Führungsbahn z. B. 2a unabhängig voneinander verfahrbar sind, werden sie separat angetrieben, wobei alle Antriebe ebenfalls mit den Steuerungs- und Antriebsvorrichtungen 111 des Umsetzsystems 100 in Verbindung stehen. Hinsichtlich der Ausbildung und Funktionsweise der Transportschlitten 1, der Führungsbahnen 2a, 2b sowie der Bahnkörper 11, 12, 13 wird an dieser Stelle explizit auf die DE 10 2011 014 697 A1 der vorliegenden Anmelderin Bezug genommen.

Die Transportvorrichtung 107 des Umsetzsystems 100 weist einen ersten Abschnitt 112 und einen zweiten Abschnitt 113 auf, welche benachbart zu der Produktfördervorrichtung 106 jeweils an einer Seite dazu angeordnet sind und, wie aus Figur 1 ersichtlich ist, sowohl parallel zueinander als auch parallel zu der Produktfördervorrichtung 106 ausgerichtet sind. Die beiden Abschnitte 112, 113 unterscheiden sich insbesondere dadurch, dass der erste Abschnitt 112 als relativ zu der Beförderungsrichtung 120 der Produktfördervorrichtung 106 gleichlaufender Abschnitt und der zweite Abschnitt 113 als gegenlaufender Abschnitt ausgebildet ist.

Dementsprechend unterscheiden sich die beiden Abschnitte 112, 113 hinsichtlich der Transportrichtung 121 der Behälter 20 relativ zu der Beförderungsrichtung 120 der Produktfördervorrichtung 106. Entlang des ersten Abschnitts 112 werden die Behälter 20 durch die Transportvorrichtung 107 in der Beförderungsrichtung 120 der Produktfördervorrichtung 106 und somit nach dem Gleichlauf-Prinzip bewegt. Im Gegensatz dazu bewegen sich die Behälter 20 entlang des zweiten Abschnitts 113 entgegengesetzt zu der Beförderungsrichtung 120 und somit nach dem Gegenlauf-Prinzip. Das gezeigte Umsetzsystem 100 vereint dadurch die Prinzipien des Gleichlaufs und des Gegenlaufs unter Verwendung einer einzelnen Transportvorrichtung 107.

Während des Betriebs des Umsetzsystems 100 werden die Umsetzvorrichtungen 104 derart durch die Steuerungs- und Antriebsvorrichtungen 111 gesteuert, dass die Behälter 20 sowohl in dem ersten als auch in dem zweiten Abschnitt 112, 113 befüllt werden. Da die Behälter 20 gemäß Darstellung in Figur 1 zuerst den ersten Abschnitt 112 durchlaufen, beginnt das Befüllen der Behälter 20 folglich in diesem Abschnitt und kann anschließend beim Durchlaufen des zweiten Abschnitts 113 abgeschlossen werden.

Über Ihre Ausleger 114 erreichen die Umsetzvorrichtungen 104 den ersten oder den zweiten Abschnitt 112, 113, je nachdem welchem Abschnitt 112, 113 die jeweilige Umsetzvorrichtung 104 zugeordnet ist, sodass sich die Umsetzbereiche 102 der Umsetzvorrichtungen 104 auf einen der beiden Abschnitte 112, 113 der Transportvorrichtung 107 erstrecken, wie in Figur 1 dargestellt. Mit anderen Worten setzen die Umsetzvorrichtungen 104a, 104b, 104c der oberen Reihe aus Figur 1 die Produkte in den ersten Abschnitt 112 um und die Umsetzvorrichtungen 104d, 104e, 104f der unteren Reihe aus Figur 1 entsprechend in den zweiten Abschnitt 113. Alternativ ist es ebenso möglich, dass der Umsetzbereich einer Umsetzvorrichtung 104 jeweils auf beide Abschnitte 112, 113 bezogen ist und die Umsetzvorrichtungen 104 entsprechend beide Abschnitte 112, 113 bedienen können.

Die Steuerung der Umsetzvorrichtungen 104 sowie der Produktfördervorrichtung 106 erfolgt generell im Hinblick auf die maximale Effizienz des Umsetzsystems 100. In diesem Zusammenhang gilt es, ein häufiges Abbremsen der Produktfördervorrichtung 106 sowie einen Überlauf an Produkten 26 auf der Produktfördervorrichtung 106 zu vermeiden. Diese beiden unerwünschten Zustände sind allgemein bei Umsetzsystemen bekannt, welche rein nach dem Gleichlauf-Prinzip arbeiten. Bei dem vorliegenden Umsetzsystem 100 des ersten Ausführungsbeispiels, welches das Gleichlauf-Prinzip und das Gegenlauf-Prinzip vereint, hat sich jedoch gezeigt, dass die Bereitstellung des zweiten, gegenlaufenden Abschnitts 113 ausreichend ist, um die unerwünschten Eigenschaften des ersten, gleichlaufenden Abschnitts 112 derart zu negieren, sodass das Umsetzsystem 100 mit hoher Effizienz arbeitet.

Die Kamera 108 oder gegebenenfalls eine Mehrzahl von Kameras 108 ist ferner dazu eingerichtet, der Produktfördervorrichtung 106, das Umsetzen der Produkte 26 in dem ersten Abschnitt 112 sowie das Umsetzen der Produkte 26 in dem zweiten Abschnitt 113 zu überwachen. Anhand der aus der Überwachung erzeugten Daten kann daraufhin die Beförderungsgeschwindigkeit der Produkte 26 auf der Produktfördervorrichtung 106, die Transportgeschwindigkeit der Behälter 20 auf der Transportvorrichtung 107 sowie die Umsetzgeschwindigkeit der Umsetzvorrichtungen 104 gesteuert werden.

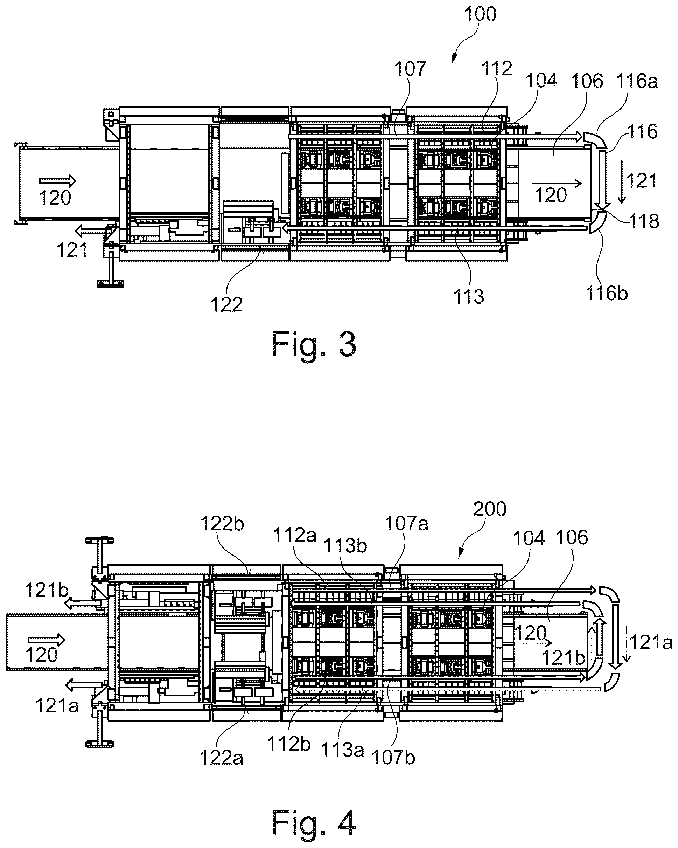

In Figur 3 ist nun beispielhaft ein vollständiges Umsetzsystem 100 gemäß dem ersten Ausführungsbeispiel in einer Draufsicht dargestellt. Das Umsetzsystem 100 umfasst in Figur 3 eine Mehrzahl von Umsetzvorrichtungen 104, wobei jeder der Umsetzvorrichtungen 104 ein eigener Umsetzbereich 102 (hier nicht dargestellt) zugeordnet ist. Die Transportvorrichtung 107 ist hier schematisch in Form von Pfeilen veranschaulicht, welche die Transportrichtung 121 der Transportmittel (nicht dargestellt) entlang der verschiedenen Abschnitte 112, 113, 116 der Transportvorrichtung 107 aufzeigen.

In diesem ersten Ausführungsbeispiel sind die Umsetzvorrichtungen 104 allesamt derart angeordnet, dass sie die auf der Produktfördervorrichtung 106 in Beförderungsrichtung 120 beförderten Produkte (hier nicht dargestellt) in dem ersten Abschnitt 112 oder in dem zweiten Abschnitt 113 der Transportvorrichtung 107 umsetzen. Dementsprechend befüllen bestimmte Umsetzvorrichtungen 104, in diesem Fall die obere Reihe, umfassend sechs Umsetzvorrichtungen 104, nach dem Gleichlauf-Prinzip, während die untere Reihe mit ebenfalls sechs Umsetzvorrichtungen 104 im Gegenlauf-Prinzip arbeitet.

Der erste und der zweite Abschnitt 112, 113 der Transportvorrichtung 107 sind über einen dritten Abschnitt 116 miteinander verbunden, sodass die Transportmittel 20 (vgl. Figur 1) zu Beginn der Transportvorrichtung 107 den ersten Abschnitt 112, anschließend den dritten Abschnitt 116 und schließlich den zweiten Abschnitt 113 durchlaufen. Im Gegensatz zu dem ersten und zweiten Abschnitt 112, 113, welche parallel zueinander und zu der Produktfördervorrichtung 106 angeordnet sind, ist der dritte Abschnitt 116 stirnseitig umlaufend an einem stirnseitigen Ende 118 der Produktfördervorrichtung 106 ausgebildet, wie aus Figur 3 hervorgeht. Die drei Abschnitte 112, 113, 116 bilden in der Draufsicht eine U-förmige Anordnung, wobei der dritte Abschnitt 116 im Wesentlichen rechtwinklig zu dem ersten und dem zweiten Abschnitt 112, 113 ausgebildet ist.

Indem der dritte Abschnitt 116 unmittelbar benachbart zu dem stirnseitigen Ende 118 der Produktfördervorrichtung 106 angeordnet ist, wird ein platzsparender Übergang zwischen dem ersten Abschnitt 112 und dem zweiten Abschnitt 113 sowie ferner eine reibungslose Überführung der Transportmittel 20 von dem ersten, gleichlaufenden Abschnitt 112 in den zweiten, gegenlaufenden Abschnitt 113 gewährleistet. Hierzu weist der dritte Abschnitt 116 an seinen beiden Enden jeweils einen Übergangsbereich 116a, 116b auf, welche dazu eingerichtet sind, das Überführen der Transportmittel 20 von dem ersten Abschnitt 112 in den dritten Abschnitt 116 bzw. von dem dritten Abschnitt 116 in den zweiten Abschnitt 113 zu vereinfachen. Der dritte Abschnitt 116 ist beispielsweise analog zu der restlichen Transportvorrichtung 107 als Kettenförderer ausgebildet oder weist anderweitige Handhabungsmittel, beispielsweise wenigstens einen Roboterarm (nicht dargestellt) auf, welcher die Behälter 20 am Ende des ersten Abschnitts 112 aufnimmt und entlang der Transportrichtung 121 an den Beginn des zweiten Abschnitts 113 überführt.

Figur 3 zeigt ferner, dass unmittelbar anschließend an den zweiten Abschnitt 113 eine Handhabungseinheit 122 bereitgestellt ist, welche dazu eingerichtet ist, die befüllten Transportmittel 20 im Anschluss an den Umsetzvorgang weiterzuverarbeiten, beispielsweise durch eine Schlauchbeutelmaschine zu verpacken oder für einen nachgelagerten Verpackungsvorgang vorzubereiten, und aus dem Umsetzsystem 100 abzuführen.

In Figur 3 nicht dargestellt, jedoch optional möglich, ist die Bereitstellung einer zweiten Handhabungseinheit 122, welche relativ zu der gezeigten Handhabungseinheit 122 gegenüberliegend zu der Produktfördervorrichtung 106 angrenzend an dem Beginn des ersten Abschnitts 112 der Transportvorrichtung 107 angeordnet ist. Diese weitere Handhabungseinheit 122 nimmt dann Transportmittel 20 für die Weiterverarbeitung auf, wenn die Transportrichtung 121 der Transportvorrichtung 107 invertiert wird. Im Zuge des Invertierens des Transportrichtung 121 wird folglich der zweite Abschnitt 113 zu dem gleichlaufenden Abschnitt und der erste Abschnitt 112 zu dem gegenlaufenden Abschnitt. Dies kann insbesondere dann sinnvoll sein, wenn die eigentlich vorgesehene Handhabungseinheit 122 aufgrund einer Fehlfunktion oder Ähnlichem deaktiviert werden muss, da das Bedienen der Transportmittel 20 in diesem Fall nahtlos durch Invertieren der Transportrichtung 121 fortgesetzt werden kann.

Schließlich ist in Figur 4 ein zweites Ausführungsbeispiel eines Umsetzsystems 200 dargestellt, welches sich von dem Umsetzsystem 100 des ersten Ausführungsbeispiels lediglich durch die Bereitstellung einer ersten sowie einer zweiten Transportvorrichtung 107a, 107b unterscheidet, weshalb hinsichtlich aller Gemeinsamkeiten auf die Ausführungen des ersten Ausführungsbeispiels verwiesen wird.

Die beiden Transportvorrichtungen 107a, 107b sind im Wesentlichen redundant, benachbart und parallel zueinander angeordnet und dazu eingerichtet, unabhängig voneinander Transportmittel 20 zum Befüllen durch Umsetzvorrichtungen 104 entlang einer jeweiligen Transportrichtung 121a, 121b zu bewegen. Die erste Transportvorrichtung 107a ist eingerichtet, um Transportmittel 20 entlang einer ersten Transportrichtung 121a zu transportieren und umfasst in der Transportrichtung 121a aufeinanderfolgend einen ersten Abschnitt 112a, einen zweiten Abschnitt 113a und anschließend eine erste Handhabungseinheit 122a. Die zweite Transportvorrichtung 107b ist eingerichtet, um Transportmittel 20 entlang einer zweiten Transportrichtung 121b zu transportieren und umfasst in der Transportrichtung 121b aufeinanderfolgend einen ersten Abschnitt 112b, einen zweiten Abschnitt 113b und anschließend eine zweite Handhabungseinheit 122b.

Die Bereitstellung einer zweiten Transportvorrichtung 107b dient hauptsächlich dazu, bei Ausfall oder Wartung der ersten Transportvorrichtung 107a ohne Leistungsverlust des Umsetzsystems 200 durch die Umsetzvorrichtungen 104 weiter Produkte 26 von der Produktfördervorrichtung 106 auf Transportmittel 20 umsetzen zu können. Daher ist sowohl die erste als auch die zweite Transportvorrichtung 107a, 107b von den jeweiligen Umsetzbereichen 102 der Umsetzvorrichtungen 104 umfasst.

Die in Figur 1 gezeigte Kamera 108 oder ein anderweitiger Sensor bzw. eine anderweitige Kamera kann dazu bereitgestellt sein, einen Defekt der ersten oder der zweiten Transportvorrichtung 107a, 107b zu detektieren, woraufhin das Umsetzsystem 200 automatisch von der ersten auf die zweite Transportvorrichtung 107a, 107b oder umgekehrt umschaltet.

Abschließend sei angemerkt, dass auch der parallele Betrieb der ersten und zweiten Transportvorrichtung 107a, 107b denkbar ist, sollte dies aus betrieblichen Gründen sinnvoll oder notwendig sein. Auch ist die Anzahl und Ausgestaltung der Umsetzvorrichtungen 104 des ersten und zweiten Ausführungsbeispiels nicht festgelegt. So können die Umsetzvorrichtungen beispielsweise dazu eingerichtet sein, Transportmittel 20 in dem ersten Abschnitt 112 und/oder in dem zweiten Abschnitt 113 zu befüllen. Gewünschtenfalls kann auch wenigstens eine Umsetzvorrichtung 104 vorgesehen sein, welche Transportmittel 20 in dem dritten Abschnitt 116 befüllt.

## Patentansprüche

1. Umsetzsystem (100, 200) zum Umsetzen von Produkten (26) auf Transportmittel (20), welche eine bestimmte Füllanzahl von Produkten (26) aufnehmen, wobei das Umsetzsystem (100, 200) umfasst:
- wenigstens eine bewegte Produktfördervorrichtung (106), auf welcher die Produkte (26) entlang einer Beförderungsrichtung (120) beförderbar sind;
- wenigstens eine Transportvorrichtung (107), welche zum Bewegen der Transportmittel (20) eingerichtet ist; und
- wenigstens eine Umsetzvorrichtung (104) zum Umsetzen der Produkte (26) von der Produktfördervorrichtung (106) auf die Transportmittel (20) in einem Umsetzbereich (102),
wobei die Transportvorrichtung (107) die Transportmittel (20) wenigstens durch den Umsetzbereich (102) bewegt, und
wobei die Produktfördervorrichtung (106) und die Transportvorrichtung (107) wenigstens abschnittsweise parallel zueinander verlaufen,
**dadurch gekennzeichnet, dass**
die Transportvorrichtung (107) wenigstens einen ersten Abschnitt (112) aufweist, entlang welchem ein Transport der Produkte (26) durch die Transportmittel (20) in der Beförderungsrichtung (120) der Produktfördervorrichtung (106) verläuft, und wenigstens einen zweiten Abschnitt (113) aufweist, entlang welchem ein Transport der Produkte (26) durch die Transportmittel (20) entgegengesetzt zu der Beförderungsrichtung (120) der Produktfördervorrichtung (106) verläuft.

2. Umsetzsystem (100, 200) nach Anspruch 1,
wobei zwischen dem wenigstens einen ersten Abschnitt (112) und dem wenigstens einen zweiten Abschnitt (113) ein dritter Abschnitt (116) der Transportvorrichtung (107) verläuft, welcher dazu eingerichtet ist, die Produkte (26) von dem ersten Abschnitt (112) in den zweiten Abschnitt (113) zu überführen,
und wobei der dritte Abschnitt (116) der Transportvorrichtung (107) vorzugsweise an einem stirnseitigen Ende (118) des Umsetzsystems (100, 200) angeordnet ist, sodass die Transportvorrichtung (107) an dem Umsetzsystem (100, 200) stirnseitig umlaufend ausgebildet ist.

3. Umsetzsystem (100, 200) nach Anspruch 2,
wobei der erste, zweite und dritte Abschnitt (112, 113, 116) in einer Draufsicht auf das Umsetzsystem (100, 200) eine U-förmige Anordnung bilden,
und/oder wobei der dritte Abschnitt (116) zum Überführen der Produkte (26) von dem ersten Abschnitt (112) in den zweiten Abschnitt (113) mit Handhabungsmitteln ausgebildet ist, und
wobei die Handhabungsmittel wenigstens eines umfassen, ausgewählt aus der Gruppe aus: Glieder- oder Bogenketten, Kurvenbänder oder einem Roboter.

4. Umsetzsystem (100, 200) nach einem der vorhergehenden Ansprüche,
wobei der Umsetzbereich (102) den ersten und den zweiten Abschnitt (112, 113) der Transportvorrichtung (107) umfasst,
oder wobei der Umsetzbereich (102) den ersten, den zweiten und den dritten Abschnitt (112, 113, 116) der Transportvorrichtung (107) umfasst.

5. Umsetzsystem (100, 200) nach einem der vorhergehenden Ansprüche,
wobei die wenigstens eine Umsetzvorrichtung (104) dazu eingerichtet ist, Transportmittel (20) sowohl in dem ersten Abschnitt (112) als auch in dem zweiten Abschnitt (113) der Transportvorrichtung (107) zu befüllen,
oder wobei die wenigstens eine Umsetzvorrichtung (104) nur dem ersten Abschnitt (112) oder nur dem zweiten Abschnitt (113) der Transportvorrichtung (107) zugeordnet ist.

6. Umsetzsystem (100, 200) nach einem der vorhergehenden Ansprüche,
wobei nachfolgend zu dem zweiten Abschnitt (113) der Transportvorrichtung (107) wenigstens eine Handhabungseinheit (122) angeordnet ist, welche dazu eingerichtet ist, die Produkte oder die mit Produkten (26) befüllten Transportmittel (20) zu handhaben, insbesondere zu verpacken,
und/oder wobei die Transportvorrichtung (107) dazu eingerichtet ist, eine Transportrichtung (121) der Transportmittel (20) zu invertieren.

7. Umsetzsystem (100, 200) nach einem der vorhergehenden Ansprüche,
wobei die Transportvorrichtung (107) Transportschlitten (1) umfasst, welche entlang der Transportvorrichtung (107) unabhängig voneinander verfahrbar sind, und
wobei jeder Transportschlitten (1) dazu eingerichtet ist, wenigstens ein Transportmittel (20) zu bewegen,
und wobei die Transportvorrichtung (107) vorzugsweise wenigstens eine erste Führungsbahn (2a) und wenigstens eine zweite Führungsbahn (2b) umfasst, welche jeweils dazu eingerichtet sind, eine Mehrzahl von Transportschlitten (1) aufzunehmen und unabhängig voneinander zu verfahren,
wobei die erste Führungsbahn (2a) vorzugsweise diejenigen Transportschlitten (1) aufnimmt, welche mit Produkten (26) zu befüllende Transportmittel (20) bewegen, und die zweite Führungsbahn (2b) vorzugsweise diejenigen Transportschlitten (1) aufnimmt, welche leere Transportmittel (20) zu einem Anfang der ersten Führungsbahn (2a) rückführt, und
wobei die erste und die zweite Führungsbahn (2a, 2b) vorzugsweise übereinander oder nebeneinander angeordnet sind.

8. Umsetzsystem (200) nach einem der vorhergehenden Ansprüche,
wobei die Transportvorrichtung (107) eine erste Transportvorrichtung (107a) und eine von der ersten Transportvorrichtung separate zweite Transportvorrichtung (107b) umfasst, und
wobei die erste Transportvorrichtung (107a) und die zweite Transportvorrichtung (107b) jeweils wenigstens einen ersten Abschnitt (112a, 112b) aufweisen, entlang welchem ein Transport der Produkte (26) durch die Transportmittel (20) in der Beförderungsrichtung (120) der Produktfördervorrichtung (106) verläuft, und wenigstens einen zweiten Abschnitt (113a, 113b) aufweisen, entlang welchem ein Transport der Produkte (26) durch die Transportmittel (20) entgegengesetzt zu der Beförderungsrichtung (120) der Produktfördervorrichtung (106) verläuft,
und wobei nachfolgend zu dem zweiten Abschnitt (113a) der ersten Transportvorrichtung (107a) vorzugsweise eine erste Handhabungseinheit (122a) angeordnet ist, welche dazu eingerichtet ist, die von der ersten Transportvorrichtung (107a) transportierten Produkte zu handhaben, insbesondere zu verpacken, und nachfolgend zu dem zweiten Abschnitt (113b) der zweiten Transportvorrichtung (107b) vorzugsweise eine zweite Handhabungseinheit (122b) angeordnet ist, welche dazu eingerichtet ist, die von der zweiten Transportvorrichtung (107b) transportierten Produkte zu handhaben, insbesondere zu verpacken.

9. Umsetzsystem (200) nach Anspruch 8,
wobei der erste Abschnitt (112a) der ersten Transportvorrichtung (107a) und der erste Abschnitt (112b) der zweiten Transportvorrichtung (107b) relativ einer Längsmittelachse der Produktfördervorrichtung (106) auf unterschiedlichen Seiten der Produktfördervorrichtung (106) angeordnet sind, oder/und
wobei der zweite Abschnitt (113a) der ersten Transportvorrichtung (107a) und der zweite Abschnitt (113b) der zweiten Transportvorrichtung (107b) relativ einer Längsmittelachse der Produktfördervorrichtung (106) auf unterschiedlichen Seiten der Produktfördervorrichtung (106) angeordnet sind, oder/und
wobei die erste Handhabungseinheit (122a) und die zweite Handhabungseinheit (122b) relativ einer Längsmittelachse der Produktfördervorrichtung (106) auf unterschiedlichen Seiten der Produktfördervorrichtung (106) angeordnet sind.

10. Umsetzsystem (100, 200) nach einem der vorhergehenden Ansprüche,
wobei das Umsetzsystem (100, 200) wenigstens eine Kamera oder einen Sensor (108) umfasst, welcher das Umsetzen der Produkte (26) in dem Umsetzbereich (102) überwacht.

11. Verfahren zum Umsetzen von Produkten (26) auf Transportmittel (20) mittels wenigstens einer Umsetzvorrichtung (104) eines Umsetzsystems (100, 200), insbesondere eines Umsetzsystems (100, 200) nach einem der vorhergehenden Ansprüche, wobei das Verfahren umfasst:
- Bewegen der zu befüllenden Transportmittel (20) mittels wenigstens einer Transportvorrichtung (107) durch wenigstens einen Umsetzbereich (102), in welchem die Umsetzvorrichtung (104) angeordnet ist; und
- Befüllen der Transportmittel (20), indem die Umsetzvorrichtung (104) Produkte (26) von wenigstens einer bewegten Produktfördervorrichtung (106), welche wenigstens abschnittsweise parallel zu der Transportvorrichtung (107) verläuft, in die zu befüllenden Transportmittel (20) umsetzt,
**dadurch gekennzeichnet, dass**
die Produkte (26) auf die Transportmittel (20) sowohl in einem ersten Abschnitt (112) umgesetzt werden, entlang welchem ein Transport der Produkte (26) durch die Transportmittel (20) in einer Beförderungsrichtung (120) der Produktfördervorrichtung (106) verläuft, als auch in einem zweiten Abschnitt (113) der Transportvorrichtung (107) umgesetzt werden, entlang welchem ein Transport der Produkte (26) durch die Transportmittel (20) entgegengesetzt zu der Beförderungsrichtung (120) der Produktfördervorrichtung (106) verläuft.

12. Verfahren nach Anspruch 11,
wobei die Transportmittel (20) mittels der Transportvorrichtung (107) von dem ersten Abschnitt (112) über einen dritten Abschnitt (116) der Transportvorrichtung (107) zu dem zweiten Abschnitt (113) bewegt werden, wobei der dritte Abschnitt (116) vorzugsweise derart an einem stirnseitigen Ende (118) des Umsetzsystems (100, 200) angeordnet ist, dass sich die Transportvorrichtung stirnseitig umlaufend um das Umsetzsystem (100, 200) erstreckt,
und/oder wobei erste Steuerungs- und Antriebsvorrichtungen zum Antreiben der Produktfördervorrichtung (106) und der Transportvorrichtung (107) eingerichtet sind und die Beförderungsgeschwindigkeit der Produkte (26) auf der Produktfördervorrichtung (106) unabhängig von der Umsetzgeschwindigkeit der Umsetzvorrichtung (104) in dem ersten und dem zweiten Abschnitt (112, 113) der Transportvorrichtung (107) geregelt wird,
und wobei die Transportgeschwindigkeit der Transportmittel (20) vorzugsweise anhand der Umsetzgeschwindigkeit der entlang der Transportrichtung (121) der Transportmittel (20) letzten Umsetzvorrichtung (104) geregelt wird.

13. Verfahren nach Anspruch 11 oder 12,
wobei die wenigstens eine Umsetzvorrichtung (104) über zweite Steuerungs- und Antriebsvorrichtungen (111) derart gesteuert wird, dass das Befüllen eines Transportmittels (20) priorisiert wird, solange sich das Transportmittel (20) in dem ersten Abschnitt (112) der Transportvorrichtung (107) befindet.

14. Verfahren zum Umsetzen von Produkten (26) auf Transportmittel (20) mittels wenigstens einer Umsetzvorrichtung (104) eines Umsetzsystems (200) nach Anspruch 8 oder 9,
wobei der Betrieb des Umsetzsystems (200) umschaltbar ist zwischen einem ersten Betriebsmodus, in welchem die Umsetzvorrichtung (104) die Produkte (26) nur auf Transportmittel der ersten Transportvorrichtung (107a) umsetzt, während die zweite Transportvorrichtung (107b) oder/und die zweite Handhabungseinrichtung (122b) vorzugsweise inaktiv ist/sind, und einem zweiten Betriebsmodus, in welchem die Umsetzvorrichtung (104) die Produkte (26) nur auf Transportmittel der zweiten Transportvorrichtung (107b) umsetzt, während die erste Transportvorrichtung (107a) oder/und die erste Handhabungseinrichtung (122a) vorzugsweise inaktiv ist/sind.

15. Verfahren nach Anspruch 14,
wobei ein Umschalten von dem ersten Betriebsmodus in den zweiten Betriebsmodus im Wesentlichen ohne Unterbrechung der Bewegung der Produktfördervorrichtung (106) erfolgt.
